# FASCICULE DE BREVET EUROPEEN

(11) **EP 0 406 145 B1**
(45) Date de publication et mention de la délivrance du brevet: **07.09.1994**
(21) Numéro de dépôt: 90470040.8
(22) Date de dépôt: 25.06.1990
(51) Int. Cl.: F16L 37/08

(54) **Garniture d'étanchéité pour joints verrouillés étanches**
Abdichtanordnung für verriegelte dichte Verbindungen
Seal assembly for locked sealed joints

(30) Priorité: 30.06.1989 FR 8909011
(43) Date de publication de la demande: 02.01.1991
(73) Titulaire: PONT-A-MOUSSON S.A., 54017 Nancy (FR)
(72) Inventeur: Lagabe, André, Montauville, F-54700 Point à Mousson (FR)
(74) Mandataire: Puit, Thierry

(56) Documents cités:
- EP-A- 310 534
- DE-A- 3 405 988
- FR-A- 1 591 079
- FR-A- 2 584 473
- US-A- 3 018 785

## Description

La présente invention est relative aux joints verrouillés pour tuyaux à bout mâle et à emboîtement avec interposition d'une garniture d'étanchéité en élastomère.

Elle a plus particulièrement pour objet une garniture d'étanchéité pour joints verrouillés télescopiques dans lesquels le bout mâle de l'un des tuyaux pénètre dans l'emboîtement de l'autre tuyau tout en comprimant radialement la garniture d'étanchéité.

En effet, lorsqu'un joint d'étanchéité est réalisé, il convient d'empêcher les mouvements axiaux d'un tuyau par rapport à l'autre qui peuvent apparaître ultérieurement.

Ces mouvements sont en effet de nature à affaiblir la bonne étanchéité du joint, voire à disjoindre complètement les tuyaux initialement joints.

Ce problème devient particulièrement crucial dans le cas de canalisations transportant des fluides sous pression. En effet, la pression du fluide engendre alors des forces importantes tendant à séparer les éléments constitutifs du joint.

On connait ainsi des garnitures d'étanchéité dans lesquelles sont insérés, régulièrement répartis, des éléments de verrouillage situés à la partie avant de la garniture, côté ouverture de l'emboîtement.

On connaît, par le document FR 1 490 680, une telle garniture dans laquelle les éléments de verrouillage, constitués par des inserts métalliques, peuvent tourner par glissement contre la surface interne de l'emboîtement.

Les éléments de verrouillage fonctionnent en s'arcboutant à une de leurs extrémités contre une face interne de l'emboîtement et, à leur extrémité opposée, contre la surface externe du bout mâle dans laquelle ils pénètrent par leur profil en biseau.

Or, en fonction des tolérances de fabrication du bout mâle et de l'emboîtement des deux tuyaux à raccorder, l'angle que fait la pointe d'un insert métallique par rapport à la surface externe du bout mâle dans laquelle il pénètre est variable.

Or il est apparu que, pour obtenir un verrouillage optimum, cet angle devait être situé entre certaines limites fonctions de la force de verrouillage désirée, du matériau des tuyaux à raccorder et de l'état de surface de ces tuyaux.

Si l'angle que fait l'insert avec la surface externe du bout mâle est trop faible, l' insert de verrouillage se contente de frotter contre ledit bout mâle sans assurer un verrouillage réel.

Si l'angle est trop élevé, la composante de la force d'arc-boutement parallèle au bout mâle devient trop faible pour assurer un verrouillage effectif.

Or, il est apparu, lors des mouvements de recul du bout mâle par rapport à l'emboîtement, que les inserts métalliques de verrouillage avaient parfois tendance à poursuivre leur pénétration dans la surface externe du bout mâle.

Ceci entraîne une diminution artificielle de la longueur des inserts qui favorise le basculement de ceux-ci au delà des limites d'inclinaison qui doivent être respectées et qui diminue l'effet d'arc-boutement.

En outre, ceci occasionne une détérioration du bout mâle qui peut aller jusqu'à un percement de ce dernier ou un décollement du revêtement interne de celui-ci.

La présente invention a donc pour but de résoudre ce problème.

La présente invention a donc pour objet le raccordement d'un tuyau à bout mâle et d'un tuyau à emboîtement comportant une garniture d'étanchéité en élastomère, dans laquelle sont disposés des éléments de verrouillage dont l'inclinaison est variable et qui présentent une extrémité venant en appui contre une surface interne de l'emboîtement et une extrémité venant pénétrer la surface externe du bout mâle, des moyens pour limiter la pénétration des éléments de verrouillage dans la surface externe du bout mâle étant prévus à l'extrémité des éléments de verrouillage venant pénétrer la surface externe du bout mâle, lesdits moyens comprenant, pour chaque élément de verrouillage, une surface plane définie pour être parallèle au bout mâle quand l'inclinaison limite de l'élément de verrouillage par rapport audit bout mâle est atteinte.

D'autres caractéristiques et avantages ressortiront à la suite de la description qui va suivre faite en référence aux dessins donnés uniquement à titre d'exemples non limitatifs et parmi lesquels:
- la Fig. 1 représente une vue en coupe axiale d'un joint d'étanchéité muni d'une garniture selon l'invention,
- la Fig. 2 représente une vue en coupe axiale d'une garniture d'étanchéité selon l'invention,
- la Fig. 3 représente une vue de détail en coupe d'un élément de verrouillage d'une garniture selon l'invention.

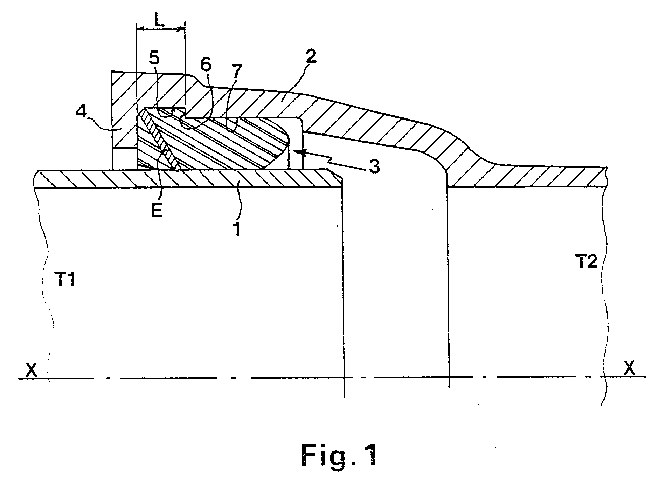

Comme représenté Fig. 1, un joint d'étanchéité est constitué d'un bout mâle 1 d'un tuyau T1 et d'un emboîtement 2 d'un second tuyau T2 coaxiaux d'axe X-X, une garniture d'étanchéité 3, en élastomère, étant interposée entre le bout mâle 1 et l'emboîtement 2, cette garniture d'étanchéité 3 étant muni d'éléments de verrouillage E en métal.

L'emboîtement 2 présente, à son extrémité d'entrée, après un collet 4, une gorge cylindrique 5, de longueur axiale L, coaxiale à l'emboîtement 2. Cette gorge 5 est suivie, après un décrochement radial constitué par un épaulement 6, par une paroi cylindrique 7 de l'emboîtement 3 de diamètre inférieur au diamètre interne de la gorge 5.

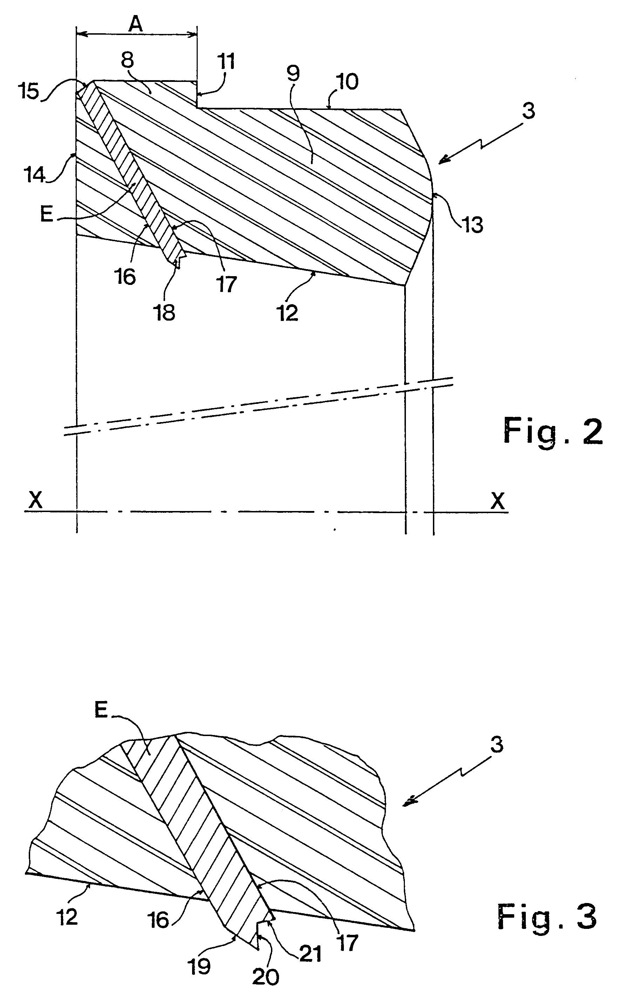

La garniture d'étanchéité 3, telle que représentée Fig. 2, présente, à sa surface externe, un talon d'ancrage 8, de largeur A correspondant à la longueur axiale L de la gorge 5 de l'emboîtement 2. Selon l'exemple de réalisation représenté Fig. 2, la surface externe du talon d'ancrage 8 est cylindrique d'axe X-X.

Ce talon d'ancrage 8 est prolongé, selon l'axe X-X, par un corps d'étanchéité 9 de surface externe de révolution 10 cylindrique d'axe X-X.

Le talon d'ancrage 8 se raccorde à la surface 10 par une joue transversale 11 qui forme un décrochement entre les surfaces périphériques du talon d'ancrage 8 et du corps 9.

Le diamètre externe du talon d'ancrage 8 correspond au diamètre interne de la gorge 5 de l'emboîtement 3, la surface externe de la garniture 3, constituée par le talon d'ancrage 8, la joue 11 et la surface 10, étant d'un profil correspondant au profil interne de l'emboîtement 2 constitué par la gorge 5, l'épaulement 6 et la paroi 7.

Selon l'exemple représenté Fig. 2, la garniture d'étanchéité 3 présente, à sa face interne, une surface tronconique 12 qui se raccorde à la surface 10 du corps 9 par une surface courbe 13. Le corps d'étanchéité 9 est donc limité par les surfaces 10, 12 et 13.

La garniture d'étanchéité est limitée, à son extrémité opposée à la surface courbe 13, par une face radiale d'extrémité 14 qui se raccorde au talon d'ancrage 8 par un chanfrein 15. Cette surface radiale d'extrémité 14 et le chanfrein 15 sont destinés à venir au contact d'une surface correspondante interne du collet 4 de l'emboîtement 2.

Le diamètre de l'arête constituée par les faces 12 et 13 du corps 9 est plus faible que le diamètre de l'arête constituée par les faces 12 et 14, le diamètre du bout mâle 1 du tuyau T1 étant compris entre ces deux diamètres extrêmes.

Cette garniture d'étanchéité 3 est pourvue, régulièrement répartis à sa périphérie, d'entailles, dans lesquelles sont placés les éléments de verrouillage E, qui vont du talon d'ancrage 8 à la surface tronconique 12 de la garniture 3.

Selon un autre mode de réalisation, la garniture d'étanchéité pourrait être surmoulée sur les éléments de verrouillage E.

Ainsi, chaque élément de verrouillage E présente une extrémité affleurant le talon d'ancrage 8 et une extrémité qui dépasse à la surface tronconique 12 à l'intérieur de la garniture 3.

Comme on le voit aux Fig. 2 et 3, l'extrémité d'un élément de verrouillage E qui dépasse à la surface 12 est constituée de deux faces 16 et 17, ici planes et parallèles, terminées par un biseau 18 constitué de deux faces planes 19 et 20.

La face plane 19 se raccorde à la face 16 alors que la face 20 se raccorde à la face 17 par l'intermédiaire d'une surface 21 servant de limiteur de la pénétration du biseau 18 dans la surface externe du bout mâle 1, la face 16 étant du côté de la face radiale d'extrémité 14 de la garniture 1 et la face 17 étant du côté de la surface courbe 13 du corps 9 de la garniture 3.

Selon une variante de l'invention non représentée, les faces 19 et 16 peuvent être confondues en une surface unique.

Selon l'exemple représenté aux Fig. 2 et 3, la surface 21 est une surface plane définie pour être parallèle au bout mâle 1 quand l'inclinaison limite de l'élément de verrouillage E par rapport au dit bout mâle 1 est atteinte.

Il va maintenant être décrit le montage d'un joint muni de la garniture d'étanchéité selon l'invention.

Après avoir introduit la garniture 3 dans son logement dans l'emboîtement 2, le talon d'ancrage 8 étant dans la gorge 5 et la surface 10 du corps 9étant en contact avec la surface 7 de l'emboîtement 2, le bout mâle 1 d'un tuyau T1 est introduit dans l'emboîtement 2.

Ce bout mâle 1, par son introduction, incline les éléments de verrouillage E et, entrant en contact avec la surface 12 de la garniture 3, comprime le corps d'étanchéité 9.

Ensuite, lors du premier mouvement de recul du bout mâle 1 hors de l'emboîtement 2, le biseau 18 de chaque élément de verrouillage E étant en contact avec la surface externe du bout mâle 1, chaque biseau 18 va pénétrer dans la surface externe du bout mâle 1.

Ce mouvement de pénétration s'accompagne d'une légère rotation de l'insert E autour de sa surface de contact avec la surface interne de l'emboîtement 2 rendue possible par la pénétration du biseau 18 dans le bout mâle 1.

Une fois que le biseau 18 a pénétré jusqu'à ce que la surface 21 de ce biseau soit au contact de la surface externe du bout mâle 1, cette surface 21, comme la garde d'une épée, interdit toute pénétration supplémentaire du biseau 18 dans le bout mâle 1.

Ainsi, la longueur utile de l'insert, qui rend possible le phénomène d'arc-boutement, demeure constante.

Toute rotation supplémentaire de l'insert E devient impossible et un verrouillage efficace est ainsi obtenu.

## Revendications

1. Raccordement d'un tuyau (T1) à bout mâle (1) et d'un tuyau (T2) à emboîtement (2) comportant une garniture d'étanchéité (3) en élastomère, dans laquelle sont disposés des éléments de verrouillage (E) dont l'inclinaison est variable et qui présentent une extrémité venant en appui contre une surface interne de l'emboîtement (2) et une extrémité venant pénétrer la surface externe du bout mâle (1), caractérisé en ce que des moyens (21) pour limiter la pénétration des éléments de verrouillage (E) dans la surface externe du bout mâle (1) sont prévus à l'extrémité des éléments de verrouillage (E) venant pénétrer la surface externe du bout mâle (1), lesdits moyens (21) comprenant, pour chaque élément de verrouillage (E), une surface plane (21) définie pour être parallèle au bout mâle (1) quand l'inclinaison limite de l'élément de verrouillage (E) par rapport audit bout mâle (1) est atteinte.

2. Raccordement selon la revendication 1 caractérisé en ce que la garniture d'étanchéité (3) présente, à une surface externe, un talon d'ancrage (8) venant se loger dans une gorge (5) ménagée à une surface interne de l'emboîtement (2), et, à une surface interne, une surface (12) venant au contact de la surface externe du bout mâle (1), chaque élément de verrouillage (E) présentant une extrémité affleurant le talon d ancrage (8) et une extrémité qui dépasse à la surface (12) à l'intérieur de la garniture (3).

3. Raccordement selon l'une des revendications précédentes caractérise en ce que l'extrémité d'un élément de verrouillage (E) qui dépasse la surface (12) de la garniture (3) est constituée d'une première face plane (16) située du côté d'une face radiale d'extrémité (14) de la garniture (3) et d'une seconde face plane (17) située du côté d'une surface courbe (13) d'un corps (9) de ladite garniture (3), ces deux faces planes (16, 17) étant terminées par un biseau (18) constitué de deux faces planes convergentes (19, 20).

4. Raccordement selon la revendication 3 caractérisé en ce que l'une (19) des faces planes convergentes du biseau (18) se raccorde à la première face plane (16) de l'extrémité de l'élément de verrouillage (E), alors que l'autre face plane (20) convergente du biseau (18) se raccorde à la seconde face plane (17) de l'extrémité de l'élément de verrouillage (E) et ce par l'intermédiaire de la surface plane (21) servant de limiteur de pénétration du biseau (18) dans la surface externe du bout mâle (1).

## Claims

1. Connection of a pipe (T1) with a male end (1) and a pipe (T2) with a socket (2), having an elastomeric sealing gasket (3) in which there are arranged locking elements (E) whereof the inclination is variable and which has an end which comes to bear against an internal surface of the socket (2) and an end which comes to penetrate the external surface of the male end (1), characterized in that means (21) for limiting the penetration of the locking elements (E) in the external surface of the male end (1) are provided at the end of the locking elements (E) which come to penetrate the external surface of the male end (1), the said means (21) comprising, for each locking element (E), a planar surface (21) defined to be parallel to the male end (1) when the inclination limit of the locking element (E) with respect to the said male end (1) is reached.

2. Connection according to Claim 1, characterized in that the sealing gasket (3) has, on an external surface, an anchoring heel (8) which comes to fit into a groove (5) made on an internal surface of the socket (2), and, on an internal surface, a surface (12) which comes into contact with the external surface of the male end (1), each locking element (E) having an end which is flush with the anchoring heel (8) and an end which projects beyond the surface (12) in the interior of the gasket (3).

3. Connection according to one of the preceding claims, characterized in that the end of a locking element (E) which projects beyond the surface (12) of the gasket (3) is formed by a first planar face (16) located on the side of a radial end face (14) of the gasket (3) and by a second planar face (17) located on the side of a curved surface (13) of a body (9) of the said gasket (3), these two planar faces (16, 17) terminating in a bevel (18) formed by two converging planar faces (19, 20).

4. Connection according to Claim 3, characterized in that one (19) of the converging planar faces of the bevel (18) connects to the first planar face (16) of the end of the locking element (E), while the other converging planar face (20) of the bevel (18) connects to the second planar face (17) of the end of the locking element (E) by way of the planar surface (21) which serves as a means for limiting the penetration of the bevel (18) into the external surface of the male end (1).

## Patentansprüche

1. Verbindung für ein Rohr (T1) mit Einsteckende (1) und ein Rohr (T2) mit Aufnahmeende (2), bestehend aus einer Abdichtanordnung (3) aus Elastomer, bei der Verriegelungselemente (E) mit variablem Neigungswinkel angeordnet sind, die ein Ende, das an einer Innenseite des Aufnahmeendes (2) in Anlage kommt, und ein Ende, das in die Außenseite des Einsteckendes (1) eindringt, aufweisen,
dadurch gekennzeichnet, daß am Ende der Verriegelungselemente (E), die in die Außenseite des Einsteckendes (1) eindringen sollen, Mittel (21) zum Begrenzen des Eindringens der Verriegelungselemente (E) in die Außenseite des Einsteckendes (1) vorgesehen sind, wobei die genannten Mittel (21) bei jedem Verriegelungselement (E) eine ebene Fläche (21) umfassen, die so bestimmt ist, daß sie parallel zu dem Einsteckende (1) liegt, wenn der Grenzneigungswinkel des Verriegelungselements (E) zu dem genannten Einsteckende (1) erreicht ist.

2. Verbindung nach Anspruch 1,
dadurch gekennzeichnet, daß die Abdichtanordnung (3) an einer Außenseite einen Verankerungsabsatz (8) aufweist, der sich in eine Auskehlung (5) einfügt, die in einer Innenfläche des Aufnahmeendes (2) ausgeführt ist, und an einer Innenseite eine Fläche (12) aufweist, die in Berührung mit der Außenfläche des Einsteckendes (1) kommt, wobei jedes der Verriegelungselemente (E) ein mit dem Verankerungsabsatz (8) fluchtendes Ende und ein Ende, das über die kegelstumpfartige Fläche (12) hinaus ins Innere der Abdichtanordnung (3) ragt, aufweist.

3. Verbindung nach einem der vorhergehenden Ansprüche,
dadurch gekennzeichnet, daß das Ende eines Verriegelungselements (E), das aus der Fläche (12) der Anordnung (3) herausragt, von einer ersten ebenen Seite (16), die einer radialen Endfläche (14) der Abdichtanordnung (3) zugewandt ist, und einer zweiten Seite (17), die einer gekrümmten Fläche (13) eines Körpers (9) der genannten Abdichtanordnung (3) zugewandt ist, gebildet wird, wobei diese beiden ebenen Seiten (16, 17) in einer Spitze (18) enden, die von zwei ebenen, konvergierenden Seiten (19, 20) gebildet wird.

4. Verbindung nach Anspruch 3,
dadurch gekennzeichnet, daß die eine (19) der ebenen, konvergierenden Seiten der Spitze (18) an die erste ebene Seite (16) des Endes des Verriegelungselements (E) anschließt, während die andere, konvergierende ebene Seite (20) der Spitze (18) an die zweite ebene Seite (17) des Endes des Verriegelungselements (E) anschließt, und zwar über die ebene Fläche (21), die als Begrenzung für das Eindringen der Spitze (18) in die Außenfläche des Einsteckendes (1) dient.
